(19) Europäisches Patentamt
European Patent Office
Office européen des brevets

(11) **EP 4 086 849 B1**

(12) **EUROPEAN PATENT SPECIFICATION**

(45) Date of publication and mention
of the grant of the patent:
**24.07.2024 Bulletin 2024/30**

(21) Application number: **21217758.8**

(22) Date of filing: **24.12.2021**

(51) International Patent Classification (IPC):
*G06T 7/68* (2017.01)

(52) Cooperative Patent Classification (CPC):
**G06T 7/68;** G06T 2207/20021

(54) **PROCEDURE FOR DETECTING THE REFLECTIONAL SYMMETRY OF GEOMETRICAL OBJECTS**

VERFAHREN ZUR ERFASSUNG DER REFLEXIONSSYMMETRIE VON GEOMETRISCHEN OBJEKTEN

PROCÉDÉ DE DÉTECTION DE LA SYMÉTRIE RÉFLECTIONNELLE D'OBJETS GÉOMÉTRIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**09.11.2022 Bulletin 2022/45**

(73) Proprietor: **Univerza v Mariboru**
**2000 Maribor (SI)**

(72) Inventors:
- **Zalik, Borut**
**2351 Kamnica (SI)**
- **Lipus, Bogdan**
**2317 Oplotnica (SI)**
- **Nerat, Andrej**
**2215 Cersak (SI)**
- **Jesenko, David**
**3240 Smarje pri Jelsah (SI)**
- **Podgorelec, David**
**2000 Maribor (SI)**

(74) Representative: **Patentni Biro AF d.o.o.**
**Kotnikova 32, p.p. 2706**
**1001 Ljubljana (SI)**

(56) References cited:
**CN-B- 108 305 289**

- **JI PENGLEI ET AL: "A fast and efficient 3D reflection symmetry detector based on neural networks", MULTIMEDIA TOOLS AND APPLICATIONS, KLUWER ACADEMIC PUBLISHERS, BOSTON, US, vol. 78, no. 24, 21 August 2019 (2019-08-21), pages 35471 - 35492, XP036935118, ISSN: 1380-7501, [retrieved on 20190821], DOI: 10.1007/S11042-019-08043-9**
- **COMBES B ET AL: "Automatic symmetry plane estimation of bilateral objects in point clouds", COMPUTER VISION AND PATTERN RECOGNITION, 2008. CVPR 2008. IEEE CONFERENCE ON, IEEE, PISCATAWAY, NJ, USA, 23 June 2008 (2008-06-23), pages 1 - 8, XP031297163, ISBN: 978-1-4244-2242-5**
- **ECINS ALEKSANDRS ET AL: "Detecting Reflectional Symmetries in 3D Data Through Symmetrical Fitting", 2017 IEEE INTERNATIONAL CONFERENCE ON COMPUTER VISION WORKSHOPS (ICCVW), IEEE, 22 October 2017 (2017-10-22), pages 1779 - 1783, XP033303636, DOI: 10.1109/ICCVW.2017.210**
- **CICCONET MARCELO ET AL: "Finding Mirror Symmetry via Registration and Optimal Symmetric Pairwise Assignment of Curves: Algorithm and Results", 2017 IEEE INTERNATIONAL CONFERENCE ON COMPUTER VISION WORKSHOPS (ICCVW), IEEE, 22 October 2017 (2017-10-22), pages 1759 - 1763, XP033303633, DOI: 10.1109/ICCVW.2017.207**
- **RAJENDRA NAGAR ET AL: "Approximate Reflection Symmetry in a Point Set: Theory and Algorithm with an Application", ARXIV.ORG, CORNELL UNIVERSITY LIBRARY, 201 OLIN LIBRARY CORNELL UNIVERSITY ITHACA, NY 14853, 27 June 2017 (2017-06-27), XP081419180**

**Description**

Field of the invention

The present invention belongs to the field of computer science and informatics and relates to a procedure for detecting if a geometric object represented in a computer memory has the reflectional symmetry. If yes, the invention is also able to define the axis or plane of the symmetry.

Background of the invention

Computer-aided design and analysis have by now replaced classical engineering procedures. A computer, however, does not possess any knowledge regarding solving geometrical tasks that are intuitive for a human being. One of such tasks is determination if a geometric object represented in a computer memory has the reflectional symmetry. The geometric object has the reflectional symmetry if a line or a plane in 3D can divide the object into two parts in such a manner that both parts are a mirror image of each other. This line for 2D object is the axis of symmetry, while for 3D objects a plane of symmetry can thus be determined. A computer machine needs a suitable procedure for solving such tasks, therefore the technical problem solved by the present invention is a design of such procedure.

Prior art

The concept of symmetry is strongly present in leading patent databases such as the US, European, Japanese, Chinese, German, and the world, but inventions rarely focus on symmetry detection. Inventions where symmetry, together with other features, is used for further data analysis and processing, e.g. in biomedicine or industry, are predominant. The axis or plane of symmetry is assumed to be an input to the method and its determination is left to the user of the invention. However, there are also patents which solve the problem of symmetry detection but are often limited to certain classes of input data, e.g. raster 2D and/or 3D images, images captured by an RGB-D camera, discrete curves, or point clouds. In the first part of the review, we summarise such patents. Amongst the inventions, we have also met some devices (optical, mechanical) for symmetry detection, e.g. of industrial products, but these are not considered in this review. In the second part of the review, we summarise selected non-patent publications, i.e. articles from scientific journals and conferences, dealing with symmetry detection. These are much more numerous, so we limit ourselves to the reflectional symmetry, which is also dealt with in the present invention.

The US 8494297B2 patent discloses a method, a system and computer-readable storage medium for determining one or more reflectional symmetries in a raster image. The method is based on the determination of the so-called symmetry value of a plurality of pixels, and the symmetry values for each individual pixel are determined from the symmetry values of pluralities containing the pixel. The interest pixels are selected on basis of the scale-invariant feature transform (SIFT), and the symmetry values of these pixels are then utilized to determine the symmetrical interest pixels. For each symmetry pair, an axis of symmetry is determined, and all pairs vote for one or more axes, which are then used to construct a symmetry map of the raster image.

Patent application US 20080021502A1 discloses a method for calculating a so-called relative difference map (RDM) between two symmetrical regions in a 2D or 3D medical image. The RDM is then used to determine the degree of asymmetry of the region of interest in the image, which is, in turn, used for various analytical, diagnostic, and therapeutic purposes. The basis for the calculation of RDM is the determination of the axis of symmetry, which is however not precisely specified in the invention. It is only stated that the axis can be interactively selected by the user or automatically determined by software on basis of image data or physical criteria.

US patent 7936928B2 describes a method for detecting symmetries in configurations of discrete curves in 2D scenes. The basis is detection of reflectional and rotational symmetries between two discrete curves. The second curve is rotated with a chosen angular step, and for each rotated iteration the correlation with the first curve is computed. The correlation values are then used to determine the rotational symmetry step (period) and the number of reflectional symmetries. The method also works over a single object if the same curve is chosen twice in the considered pair.

Patent CN 103142212B presents a method for detecting reflectional symmetry in 3D point clouds. First, a mirror copy of the point cloud is formed over an arbitrary plane of symmetry. Next, a sphere is selected in the original, and then a sphere with similar content is searched for in the copy. This process is repeated several times to produce a grid of consistent spheres, which is then used to identify pairs of mirror points from the two sets and, finally, the plane of symmetry.

Patent application JP2010014541A describes a system for Euclidean symmetry detection for a network of object geometry measurements. First, the curvature at each node of the grid is computed and, on this basis, the neighbourhood of the node representing the feature is determined. Then, feature pairs with similar attributes are found and the transformation parameters are determined. In the final step, feature pairs with the same transformation parameters are merged using the iterative closest point search and the region growing algorithm.

Document CN108305289 discloses a least-squares-based method for symmetry detection of a three-dimensional model. According to the invention, the method includes steps of calculating a minimum bounding box, using this to establish a new coordinate system, dividing the minimum bounding box according to spatial resolution, screening a symmetric data group, carrying out planar reflection symmetry detection, and checking and correcting the symmetry plane.

In "Partial and Approximate Symmetry Detection for 3D Geometry", ACM Transactions on Graphics, 25(3), pp. 560-668, 2006, Mitra, Guibas and Pauly presented a method that processes geometric models and efficiently finds a compact representation of their Euclidean symmetries, including partial and approximate ones. The method is based on the identification of pairs of sample points on 3D object with comparable local shape signatures. The clustering phase extracts the potentially relevant symmetries of the object, and by partitioning the surface into patches, a reduced symmetry graph for the extracted clusters is formed, which represents the final result of the algorithm.

Chen et al. presented an algorithm for symmetry detection in 3D point clouds based on weighted principal component analysis (PCA) in the paper "Dominant Symmetry Plane Detection for Point-Based 3D Models", Advances in Multimedia, 8 pp., 2020. The individual points' areas are used as initial weights and weighted PCA is performed to select the initial plane of symmetry. An iterative procedure follows, adjusting the weights of the points based on the distance metric and performing a weighted PCA to calculate the new plane of symmetry. When two consecutive planes are close enough or a threshold number of iterations is reached, the last calculated plane is considered as the dominant plane of symmetry of the model.

Elawady et al. in "Wavelet-based reflection symmetry detection via textural and colour histograms: Algorithm and results", Proceedings of the IEEE International Conference on Computer Vision Workshops, pp. 1734-1738, 2017, presented a method for detecting global axes of symmetry in an image. The method is based on a reliable edge-based feature extraction using a Log-Gabor wavelet filter, and on an efficient voting scheme parameterized with textural and colour neighbourhood information.

Sun and Sherrah, in "3D symmetry detection using the extended Gaussian image", IEEE Transactions on Pattern Analysis and Machine Intelligence, 19(2), pp. 164-168, 1997, proposed the method which determines the plane of symmetry using the so-called orientation histogram. This is formed by tessellation of a unit sphere into hexagonal facets with values assigned according to the number of normal vectors of the object surface pointing in the direction of a considered facet. The method selects several candidate planes passing through the coordinate origin, and their normal vectors are oriented approximately in the directions of the principal axes of the object. The histogram is then reflected over each of these planes and the correlation between the original and the reflected histogram is calculated. The plane with the highest correlation is chosen as the plane of the strongest symmetry.

Kakarala et al. proposed a method that approximates the input object with spherical harmonics in the paper "Three-dimensional bilateral symmetry plane estimation in the phase domain", Proceedings of the IEEE Conference on Computer Vision and Pattern Recognition, pp. 249-256, 2013. This yields a star-shaped surface, which may be used for the symmetry plane detection instead of the input object. This substitution is based on the observation that a real function that is symmetrical with respect to the origin has a real Fourier transform. The authors have applied this observation over spherical harmonics to derive an error function whose optimization leads to the plane of symmetry which is, however, assumed to pass through the origin.

Korman et al. in "Probably approximately symmetrical: Fast rigid symmetry detection with global guarantees", Computer Graphics Forum, 34, pp. 2-13, 2015, described a method based on a distortion measure represented by the ratio of the mismatched volumes of the original and transformed shape. They used a randomized sampling procedure. The sample with the lowest distortion defines the strongest symmetry.

Li et al. in "Efficient 3D reflection symmetry detection: A view-based approach", Graphical Models, 83 pp. 2-14, 2016, proposed a method that finds the plane of symmetry for a triangular mesh using multiple virtual cameras on a sphere surrounding the model. They used viewpoint entropy, which is computed for each rendered view and depends on the areas of the rendered faces. By calculating the entropies of all the viewpoints, they determined the so-called viewpoint entropy distribution sphere, which is characterised by sharing a common plane of symmetry with the input model. The method is only able to detect planes close to the centre of the input object, but it is faster, more accurate and less sensitive to noise than previous methods.

Schiebener et al. presented a method that finds the symmetry plane of a point cloud and uses it for completion of incomplete 3D shape data in the paper "Heuristic 3D object shape completion based on symmetry and scene context", 2016 IEEE/RSJ International Conference on Intelligent Robots and Systems (IROS), pp. 74-81, 2016. The method needs not only the input object, but also the points of its surroundings and the position from where it was captured. It relies on the fact that a 3D object is usually located on some supporting structure, e.g. the ground. Candidate support planes are identified by the RANSAC plane fitting algorithm, and for each of them, some orthogonal planes are identified as candidates for the plane of symmetry. The algorithm introduces an evaluation criterion and the candidate plane with the highest score is selected as the plane of symmetry.

Simari et al. presented the method for determination of local reflectional symmetries of 3D triangular meshes in the paper "Folding meshes: Hierarchical mesh segmentation based on planar symmetry", Symposium on geometry processing, vol 256, pp 111-119, 2006. The algorithm is based on the iterative computation of a weighted covariance matrix and a weighted centroid, where the weights of the nodes are determined with respect to the areas of the adjacent triangles, while the iterative procedure additionally considers the distances between the original and the reflected nodes.

Podolak et al. proposed a planar-reflective symmetry transform (PRST) for volumetric functions in their paper in "A planar-reflective symmetry transform for 3D shapes", ACM Transactions on Graphics, 25(3), pp. 549-559, 2006. PRST assigns to each plane in the space of planes a value that determines how symmetrical the transform is with respect to the plane. In the paper, PRST is utilized to determine the plane of symmetry of a discrete volumetric function represented by a uniform 3D grid, which, however, requires $O(n^4 \log n)$ time for a grid with $n^3$ voxels. The authors used the Gaussian transform of the Euclidean distance to convert sampled surfaces (triangular grid, point cloud) into a voxel grid, and the speed-up was achieved by approximating PRST with a randomized Monte Carlo algorithm.

Cailliere et al. used the Hough transform to detect planes of symmetry of triangular meshes in their paper "3D mirror symmetry detection using Hough transform", ICIP 2008 - 15th IEEE International Conference on Image Processing, pp. 1772-1775, 2008. The method determines the planes of symmetry for all pairs of points formed with respect to similar curvature values. It combines the principles of clustering and the Monte Carlo algorithm. Voting is applied to select the planes, which correspond to the largest number of pairs. Finally, the plane with the largest point cloud (obtained by merging the corresponding point pairs) is chosen as the result of the method. Speciale et al. applied two methods to determine the plane of symmetry in the conference paper "A symmetry prior for convex variational 3D reconstruction", European Conference on Computer Vision, Springer, pp. pp. 313-328, 2016. Their main objective was to use the detected symmetries to reconstruct 3D shapes. Both methods are based on depth information in a voxel grid. The first one is only adaptation of the method of Podolak et al. described above, while the second one labels voxels with high gradient and curvature as surface voxels and then forms candidate symmetry planes for randomly sampled pairs of surface voxels. The planes of strongest symmetries are selected as those that reflect the highest number of surface voxels either into surface voxels or into a space with unknown voxel information, where an occluded part of the object might be located. The method is expected to have a lower time and space complexity than the similar approach mentioned by Podolak and coauthors.

Combès et al. in "Automatic symmetry plane estimation of bilateral objects in point clouds", CVPR 2008 - IEEE Conference on Computer Vision and Pattern Recognition, pp. 1-8, 2008, and Ecins et al. in their paper "Detecting reflectional symmetries in 3D data through symmetrical fitting", Proceedings of the IEEE International Conference on Computer Vision, pp. 1779-1783, 2017, both used iterative closest point search to determine the symmetry plane in a point cloud. In such approaches, an initial plane of symmetry (or multiple planes) is selected in some way, followed by an iterative process that mirrors the object points over the plane. Those that are too far from the others can be ignored, while for the others the corresponding closest points of the object are determined, and the correspondence is calculated. The plane is refreshed to optimize the symmetry of point pairs and the process is iteratively repeated.

Sipiran et al. proposed a method that is essentially very similar to the approach of Caillier et al. ("3D mirror symmetry detection using Hough transform") in their paper "Approximate symmetry detection in partial 3D meshes", Computer Graphics Forum, 33, pp. 131-140, 2014. The method detects the plane of symmetry for incomplete objects represented by triangular grids. The curvature is used only as an additional filter in the selection of the pairs of points that define the candidate symmetry planes, while the primary criterion for the formation of pairs of points is the so-called Heat Kernel (point-specific heat accumulation function), the calculation of which is adapted from the theory of thermal diffusion at the surface of objects.

Cicconet et al. addressed the problem of finding the reflectional symmetry plane as a registration problem in their paper "Finding mirror symmetry via registration and optimal symmetrical pairwise assignment of curves: Algorithm and results", Proceedings of the IEEE International Conference on Computer Vision, pp. 1759-1763, 2017. The method combines mirroring over the plane and rigid transformation, and it appears to be more complex than more direct approaches to finding the plane of symmetry.

Nagar and Raman, in "Detecting approximate reflection symmetry in a point set using optimization on manifold", IEEE Transactions on Signal Processing, 67(6), pp. 1582-1595, 2019, proposed linear pair formation and manifold optimization to determine the symmetry plane of a point cloud. The method works in a space of arbitrary dimensions and is relatively slow, reaching a time complexity of $O(n^{3,5})$ for n points.

More recently, there is also an increasing number of methods that use machine learning, in particular neural networks, to determine the axis/plane of symmetry. Ji et al., 2019 in their article entitled "A fast and efficient 3D reflection symmetry detector based on neural networks" (Multimedia tools and applications, Kluwer academic publishers, vol. 78, no. 24, p. 35471-92) formulated the symmetry detection as a per-point classification problem and presented a deep neural network-based method to solve it. During the training procedure, they first collected a lot of CAD mesh models with reflectional symmetry as the training data, and then converted each mesh model into a dense point cloud with points located on the symmetry planes labeled as positive. Based on the PointNet++ architecture, they trained a multi-scale deep neural network to capture the reflection symmetry property from the point cloud automatically. During the inference procedure, a down-sampled point cloud is firstly fed into the trained neural network. Then, the output per-point classification result is used to calculate an initial symmetry plane equation with RANSAC strategy and the least square method. Finally, iterative closest point algorithm is performed to optimize the fitted symmetry plane. Machine learning-based methods are also presented in several other articles, including: Gao et al., 2021, "PRS-Net: Planar Reflective Symmetry Detection Net for 3D Models" (IEEE Transactions on Visualization and Computer Graphics, vol. 27, no. 6), Wu, Jiang and Hu, 2021, "Symmetry Detection of Occluded Point Cloud Using Deep Learning" (Procedia Computer Science, 183, pp. 32-39), and Tsogkas and Kokkinos, 2012, "Learning-based symmetry detection in natural images" (European Conference on Computer Vision, Springer, Berlin, Heidelberg, pp. 41-54). All these methods have in common that they require a rich and heterogeneous training set and a relatively time-consuming learning process before they can be used for actual symmetry detection.

More symmetry detection methods can be found in review articles, which are however sadly lacking in recent years. Nevertheless, even if they do not include the latest methods, older reviews are also very important, as they introduce well-defined criteria for classifying approaches and thus make it easier to situate, compare and evaluate newer methods. Xiao and Wu, in their paper "Analysis on Image Symmetry Detection Algorithms", Fourth International Conference on Fuzzy Systems and Knowledge Discovery (FSKD 2007), IEEE, 4, pp. 745-750, 2007, gave an overview of algorithms for symmetry detection in raster images. Mitra et al. in "Symmetry in 3D geometry: Extraction and applications", Computer Graphics Forum, 32(6), pp. 1-23, 2013, compared selected methods for detecting predominantly reflectional symmetry in 3D objects, which we have mostly summarized in this review as well. Bartalucci et al. conducted a thorough review of methods for symmetry detection in biomedical spatial data in their paper "A survey of methods for symmetry detection on 3D high point density models in biomedicine", Symmetry, 10(7), 263, 2018.

Description of the solution to the technical problem

The goal and object of the invention is to establish a method for determining the reflectional symmetry of geometric objects stored in computer memory. This technical problem is solved by the method explained in the independent claim, while the dependent claims define the preferred embodiments of the invention. None of the above documents discloses a procedure that would involve the same steps to determine the reflectional symmetry or list them in the order described below. The method according to the invention comprises the following steps:

a) Reading of a geometric object boundary from files stored in the formats of CAD systems, drawing programs, raster images, or remote sensing devices,
b) Determining an axis-aligned bounding rectangle/box for the 2D/3D geometric object based on the object boundary data obtained in step a),
c) Dividing the axis-aligned bounding rectangle/box acquired in step b) into equally sized cells in an appropriate way defined by a heuristic function or user,
d) Rasterization of the geometric object boundary by identifying a set of boundary cells through which the geometric object boundary passes,
e) Determining a centroid for the set of boundary cells identified in step d),
f) Setting an origin of the coordinate system in the centroid determined in step e),
g) Setting a testing axis/plane of symmetry, preferably parallel with the selected coordinate axis, wherein, in 3D space, it is recommended that a test plane passes through a pair of coordinate axes, i.e. candidate planes are XY or XZ or YZ,
h) Dividing the set of boundary cells into two subsets according to the testing axis/plane of symmetry,
i) Calculation of centroids for both subsets determined in step h),
j) Testing symmetry of the centroids of the subsets and their common centroid with the testing axis/plane of symmetry specified in step g), within the specified tolerances,
k) Recursive division of the subsets of boundary cells perpendicular to the axis/plane of symmetry, calculation of the centroids of pairs of the divided subsets and testing their symmetry according to the testing axis/plane of symmetry until the division interval is small enough or a non-symmetrical pair of subsets is found.

If the tests of the centroids are successful in all divisions, the geometric object is symmetrical. The procedure is repeated from step h) by rotating the testing axis of symmetry gradually around the origin (centroid) until the axis is rotated 180 degrees in 2D space. In 3D space we also rotate the testing symmetry plane, but this time in two nested loops around two coordinate axes, until the sum of the rotation angles in each coordinate direction reaches 180 degrees. It is also possible to rotate a geometric object instead of the candidate axis/plane of symmetry. The result is the same, but the implementation can be significantly slower, as the return to step b) is required after each rotation. The procedure from the first to the last step is the same for geometric objects containing holes.

The present invention is versatile. For example, information on the symmetry or non-symmetry of an object can be crucial for detecting disease changes in medical image analysis, detecting living organisms in the environment, detecting damage to insured vehicles automatically, detecting defects in the manufacture of mechanical or construction elements, and design defects in practical products in all branches of industry. Consequently, the procedure described above is applicable to all the above analyses, as well as more broadly.

The invention is further described by a flow diagram and an exemplary embodiment, which are shown in Figures:

Fig. 1: Flowchart of determining the symmetry of a geometric object,
Fig. 2: Demonstration of the procedure for determining the symmetry of a geometric object (Part 1),
Fig. 3: Demonstration of the procedure for determining the symmetry of a geometric object (Part 2).

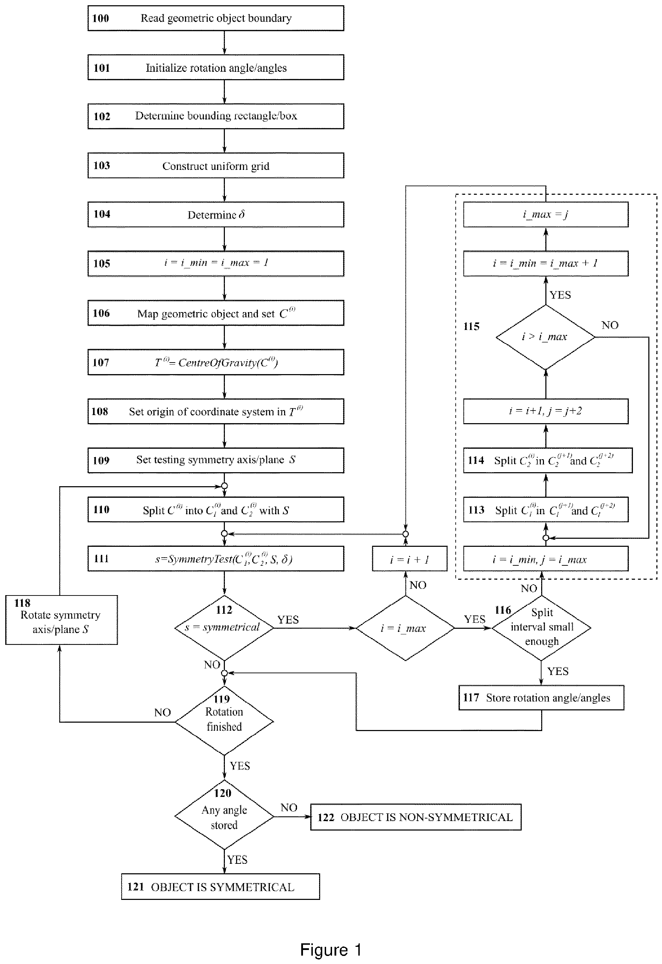

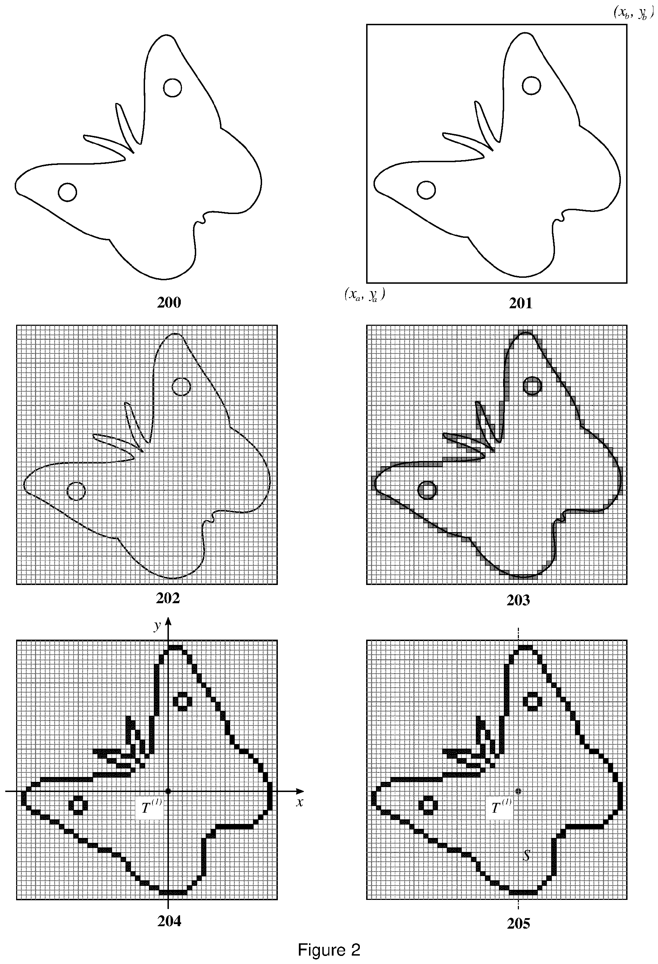

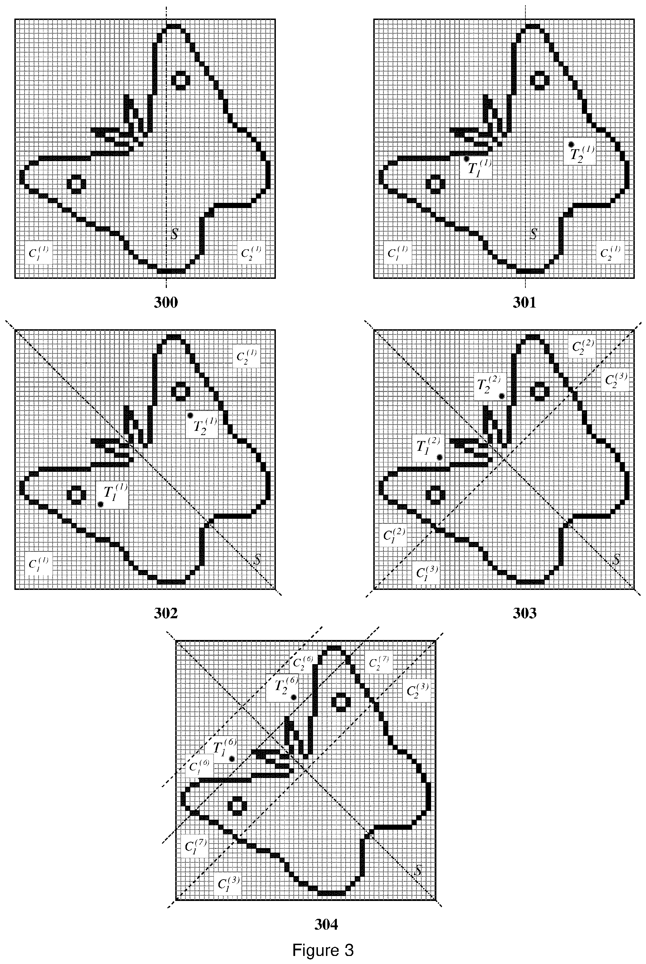

The embodiment in Figs. 2 and 3 is given in 2D space without loss of generality. Figs. 2 and 3 show a step-by-step analysis of a simple image, a sketch of a butterfly for ease of representation, but any other object could be considered. Determining the reflectional symmetry of geometric objects, according to the procedure shown in Fig. 1, and the embodiment shown graphically in Figs. 2 and 3, comprises the following steps:

a) Reading of the geometric object boundary (block 100) (an example of the geometric object boundary containing two holes can be seen in Fig. 200).
b) Initialisation of the rotation angle/angles (block 101).
c) Determination of the bounding rectangle/box (block 102) that contains all the points of the geometric object (Fig. 201).
d) A bounding rectangle/box is divided into a uniform grid (block 103), as shown in Fig. 202. The number of cells is determined by a heuristic function or set by the user. Eqs. (1), (2), (3) and (4) give an example of a heuristic function for determining the number of cells $c_x$, $c_y$ and $c_z$ in the individual coordinate directions. The Z coordinate is not used in a 2D space. The meaning of coordinates $x_a$, $x_b$, $y_a$ and $y_b$ in 2D is explained in Fig. 201, while coordinates $z_a$ and $z_b$ are added in the 3D bounding box.

$$m = \frac{\max\{abs(x_b - x_a), abs(y_b - y_a), abs(z_b - z_a)\}}{1000} \qquad (1)$$

$$c_x = \left\lceil \frac{abs(x_b - x_a)}{m} \right\rceil \qquad (2)$$

$$c_y = \left\lceil \frac{abs(y_b - y_a)}{m} \right\rceil \qquad (3)$$

$$c_z = \left\lceil \frac{abs(z_b - z_a)}{m} \right\rceil \qquad (4)$$

e) Determination of the tolerance threshold $\delta$ (block 104), which allows deviation from the ideal symmetry of the centroids of subset pairs. If no tolerance threshold is given, it is equal to the size of two cells.
f) Insertion of a geometric object into a grid of cells by rasterization (block 106) and determination of a set of boundary cells $C^{(i)}$ (Fig. 203). At the beginning of a recursive procedure, the index of the considered set of boundary cells is set to $i = 1$ (block 105). To constrain the indexes within the current recursion level, counters $i\_min$ and $i\_max$ are also set to 1.
g) Calculation of the centroid $T^{(i)}$ (block 107) for the cells from $C^{(i)}$ and placing the origin of the coordinate system into it (block 108, Fig. 204).
h) The testing axis/plane of symmetry S is set to pass through the origin of the coordinate system (centroid) (block 109, Fig. 205).

i) S splits the cells from $C^{(i)}$ into two subsets $C_1^{(i)}$ and $C_2^{(i)}$ (block 110, Fig. 300).

j) Function $SymmetryTest(C_1^{(i)}, C_2^{(i)}, S, \delta)$, (block 111) is then invoked. This function first calculates the centroids $T_1^{(i)}$ for $C_1^{(i)}$ and $T_2^{(i)}$ for $C_2^{(i)}$ (see Fig. 301, where $i = 1$). The common centroid $T^{(i)}$ of sets $C_1^{(i)}$

and $C_2^{(i)}$ is also calculated. We can use the previously calculated centroids $T_1^{(i)}$ and $T_2^{(i)}$ and thus shorten the calculation time from $O(|C_1^{(i)}| + |C_2^{(i)}|)$ to O(1) (Eq. 5). In the first iteration $T^{(i)}$ corresponds to $T^{(1)}$ calculated in step g).

$$T^{(i)} = \frac{|C_1^{(i)}|T_1^{(i)} + |C_2^{(i)}|T_2^{(i)}}{|C_1^{(i)}| + |C_2^{(i)}|}$$ 
(5)

The *SymmetryTest* function returns the result *symmetrical* if statement (6) is correct, otherwise it returns the result *non-symmetrical* (block 112). In the first case the object is possibly symmetrical, which is recursively investigated with further testing. In the second case, the reflectional symmetry with respect to S certainly does not exist in this position of the geometric object relative to the testing axis/plane of symmetry, so the method continues with step l).

$$\left|d\left(T_1^{(i)}, S\right) - d\left(T_2^{(i)}, S\right)\right| \leq \delta \wedge$$

$$\left|d\left(T_1^{(i)}, S\right) + d(T_2^{(i)}, S) - d(T_1^{(i)}, T_2^{(i)})\right| \leq \delta \wedge d(T^{(i)}, S) \leq \delta$$ 
(6)

$|C_1^{(i)}|$ and $|C_2^{(i)}|$ in Eq. (5) represent the cardinality of sets $C_1^{(i)}$ and $C_2^{(i)}$, while the function $d$ in inequality (6) denotes the non-negative distance between two points or between a point and the axis/plane of symmetry.

Reflectional symmetry is not confirmed in the situation from Fig. 301, as the centroids $T_1^{(1)}$ and $T_2^{(1)}$ do not satisfy inequality (6).

k) The cells from sets $C_1^{(i)}$ and $C_2^{(i)}$ are divided further (blocks 113 and 114) by splitting their bounding rectangles/boxes perpendicular to the testing symmetry axes/planes. The division is performed sequentially for all indices *i* from the previous iteration of the division (block 115). The step j) (block 111) is then repeated for all pairs of subsets in the current iteration, followed by the recursive subdivision, until the division interval is smaller than the double cell size (block 116). A geometric object is symmetrical if the result of the function *SymmetryTest* = *symmetrical* (within the given tolerance) for all divisions. In that case, the current values of rotation angle/angles (block 117) are saved before moving to step l).

l) if the object position has not yet been checked relative to all the rotated positions of the testing axis/plane of symmetry (block 119), then the latter is rotated by a small angle (e.g., *1°*) (block 118) and the method returns to step i). Otherwise, the method verifies whether at least one angle was stored (block 120). The object is declared as symmetrical in this case (block 121), otherwise it is non-symmetrical (block 122). The method then terminates in both cases.

The situation displayed in Fig. 302 is reached after some consecutive rotations of the testing axis/plane of symmetry. The method continues in step i). The boundary cells are divided into two subsets $C_1^{(1)}$ and $C_2^{(1)}$ according to the testing axis/plane of symmetry. The centroids $T_1^{(1)}$ and $T_2^{(1)}$ are calculated and the function *SymmetryTest* is invoked, which returns *symmetrical*. Sets $C_1^{(1)}$ and $C_2^{(1)}$ are split because of this and two pairs of subsets are obtained; in the concrete case they are $C_1^{(2)}$ and $C_2^{(2)}$ and $C_1^{(3)}$ and $C_2^{(3)}$ (Fig. 303). The recursion continues at first for the pair of sets $C_1^{(2)}$ and $C_2^{(2)}$. The centroids $T_1^{(2)}$ and $T_2^{(2)}$ are calculated (Fig. 303). As a result of the function *SymmetryTest*($C_1^{(2)}$, $C_2^{(2)}$, S, $\delta$) = *symmetrical*, the cells in subsets $C_1^{(2)}$ and $C_2^{(2)}$ are divided again

and the recursion continues in step j). Fig. 304 shows two more recursive divisions of set $C^{(1)}$ performed by the method. The current rotation angle of the axis of symmetry is stored as

$$SymmetryTest(C_1^{(i)}, C_2^{(i)}, S, \delta) = symmetrical$$

at all subdivisions. Before the method terminates, the object is declared as symmetrical. As can be seen from the embodiment, the process according to the present invention works unchanged also for geometric objects with holes.

**Claims**

1. A computer-implemented method for determining reflectional symmetry of digital 2D or 3D geometric objects stored in a computer memory, which may also contain holes, wherein the method comprises the following steps:

   a) reading (100) a boundary of the geometric object,
   b) determining (102) a bounding rectangle aligned with x-axis and y-axis for the 2D geometric object, or a bounding box aligned with x-axis, y-axis, and z-axis for the 3D geometric object according to the object's boundary data obtained in the step a),
   c) dividing (103) the bounding rectangle or bounding box acquired in step b) into cells of equal size appropriately by a heuristic function or by a user-defined number of cells,
   d) rasterization (106) of the boundary of the geometric object by identifying a set of boundary cells through which the boundary of the geometric object passes,
   e) determining (107) a centroid of the set of boundary cells identified in step d),
   f) placing (108) an origin of a coordinate system in the centroid determined in step e),
   g) placing (109) a testing axis or plane of symmetry, preferably parallel to the selected coordinate axis, where in the case of a 3D object, it is recommended that the test plane passes through any pair of coordinate axes, i.e. the candidate planes are XY, or XZ, or YZ,
   h) dividing (110) the set of boundary cells into two subsets according to the testing axis/plane of symmetry,
   i) calculation (111) of centroids for both subsets determined in step h),
   j) testing (111) the centroids of the pair of subsets of boundary cells and their common centroid by comparing perpendicular distances from the former two centroids to the test axis or plane of symmetry determined in step g), by comparing the sum of these two distances and the mutual distance between the two centroids, and by checking the deviation of the common centroid of both subsets from the testing axis or plane of symmetry, all within user-defined or heuristically determined tolerances,
   k) dividing (113 and 114) recursively pairs of subsets of boundary cells perpendicular to the axis or plane of symmetry, calculating (111) centroids for each pair of subsets obtained by the division, and performing the test from step j) until the division interval is small enough (116) or a non-symmetrical pair of subsets is found (112),

   wherein the geometric object is considered symmetrical if the testing of centroids in step j) is successful for all divisions.

2. The method according to claim 1, **characterized in that** for 2D objects the method is repeated from step h) onwards by gradually rotating the testing axis of symmetry around the coordinate origin or the centroid until the axis rotation reaches 180 degrees in 2D.

3. The method according to claim 1, **characterized in that** for 3D objects the method is repeated from the step h) onwards by gradually rotating the testing plane of symmetry in two nested loops around two coordinate axes until the sum of rotations in each coordinate direction reaches 180 degrees.

4. The method according to claim 1, **characterized in that** the method is repeated from the step b) onwards by rotating the geometric object until the sum of the rotations reaches 180 degrees, returning to the step b) after each rotation.

5. The method according to any one of the preceding claims, **characterized in that** the boundary of the object read in step a) is determined in any suitable manner or obtained from the file formats of CAD systems, drawing applications, raster images, or remote sensing devices data formats.

6. The method according to any one of the preceding claims, **characterized in that** a testing axis or a plane of symmetry, which divides the boundary cells into two subsets, is placed arbitrarily through the coordinate origin in step g).

7. The method according to any one of the preceding claims,, **characterized in that** when repeating step h) in the case of the fulfilled conditions defined in step j), both subsets are divided by an axis or plane perpendicular to the testing axis or plane of symmetry, so that two pairs of subsets of boundary cells are obtained.

8. The method according to the preceding claim, **characterized in that** the centroids for both pairs of subsets of boundary cells are calculated and tested under the conditions defined in step j).

9. The method according to any one of the preceding claims, **characterized in that** the division of the subsets perpendicular to the axis or plane of symmetry is recursively continued in step k) until the division interval is smaller than the size of two cells or a user-defined parameter.


**Patentansprüche**

1. Computerimplementiertes Verfahren zum Erfassen der Reflexionssymmetrie digitaler geometrischer 2D- oder 3D-Objekte, die in einem Computerspeicher gespeichert sind und auch Löcher enthalten können, wobei das Verfahren die folgenden Schritte umfasst:

   a) Lesen (100) einer Grenze des geometrischen Objekts,
   b) Ermitteln (102) eines Begrenzungsrechtecks, das mit der x-Achse und y-Achse für das geometrische 2D-Objekt ausgerichtet ist, oder eines Begrenzungsrahmens, der mit der x-Achse, y-Achse und z-Achse für das geometrische 3D-Objekt ausgerichtet ist, gemäß der Grenzdaten des Objekts, die in Schritt a) erhalten wurden,
   c) Teilen (103) des in Schritt b) erfassten Begrenzungsrechtecks oder Begrenzungsrahmens in Zellen entsprechend gleicher Größe durch eine heuristische Funktion oder durch eine benutzerdefinierte Anzahl von Zellen,
   d) Rasterung (106) der Grenze des geometrischen Objekts durch Identifizieren eines Satzes von Grenzzellen, durch die die Grenze des geometrischen Objekts verläuft,
   e) Ermitteln (107) eines Flächenschwerpunkts des in Schritt d) identifizierten Satzes von Grenzzellen,
   f) Platzieren (108) eines Ursprungs eines Koordinatensystems im Flächenschwerpunkt, der in Schritt e) bestimmt wurde,
   g) Platzieren (109) einer Testachse oder Symmetrieebene, vorzugsweise parallel zur ausgewählten Koordinatenachse, wobei im Fall eines 3D-Objekts empfohlen wird, dass die Testebene durch ein beliebiges Paar von Koordinatenachsen verläuft, d. h. die Kandidatenebenen sind XY oder XZ oder YZ,
   h) Unterteilen (110) des Satzes von Grenzzellen in zwei Teilmengen entsprechend der Testachse/-symmetrieebene,
   i) Berechnung (111) der Flächenschwerpunkte für beide in Schritt h) ermittelten Teilmengen,
   j) Testen (111) der Flächenschwerpunkte des Paars von Teilmengen von Grenzzellen und ihres gemeinsamen Flächenschwerpunkts durch Vergleichen senkrechter Abstände von den beiden erstgenannten Flächenschwerpunkten mit der in Schritt g) bestimmten Testachse oder -symmetrieebene durch Vergleichen der Summe dieser beiden Abstände und dem gegenseitigen Abstand zwischen den beiden Flächenschwerpunkten und durch Überprüfen der Abweichung des gemeinsamen Flächenschwerpunkts beider Teilmengen von der Testachse oder -symmetrieebene, alles innerhalb benutzerdefinierter oder heuristisch ermittelter Toleranzen,
   k) rekursives Teilen (113 und 114) von Paaren von Teilmengen von Grenzzellen senkrecht zur Achse oder Symmetrieebene, Berechnen (111) von Flächenschwerpunkten für jedes Paar von Teilmengen, die durch die Teilung erhalten werden, und Durchführen des Tests ab Schritt j), bis das Teilungsintervall klein genug ist (116) oder ein nicht symmetrisches Teilmengenpaar gefunden ist (112),

   wobei das geometrische Objekt als symmetrisch gilt, wenn das Testen von Flächenschwerpunkten in Schritt j) für alle Teilungen erfolgreich ist.

2. Verfahren nach Anspruch 1, **dadurch gekennzeichnet, dass** für 2D-Objekte das Verfahren ab Schritt h) wiederholt wird, indem die Testsymmetrieachse schrittweise um den Koordinatenursprung oder den Flächenschwerpunkt gedreht wird, bis die Achsendrehung in 2D 180 Grad erreicht.

3. Verfahren nach Anspruch 1, **dadurch gekennzeichnet, dass** für 3D-Objekte das Verfahren ab Schritt h) wiederholt wird, indem die Testsymmetrieebene schrittweise in zwei verschachtelten Schleifen um zwei Koordinatenachsen gedreht wird, bis die Summe der Drehungen in jeder Koordinatenrichtung 180 Grad erreicht.

4. Verfahren nach Anspruch 1, **dadurch gekennzeichnet, dass** das Verfahren ab Schritt b) wiederholt wird, indem das geometrische Objekt gedreht wird, bis die Summe der Drehungen 180 Grad erreicht, und nach jeder Drehung zu Schritt b) zurückgekehrt wird.

5. Verfahren nach einem der vorstehenden Ansprüche, **dadurch gekennzeichnet, dass** die in Schritt a) gelesene Grenze des Objekts auf jede geeignete Weise bestimmt oder aus den Datenformaten von CAD-Systemen, Zeichenanwendungen, Rasterbildern oder Remote-Abtastvorrichtungen erhalten wird.

6. Verfahren nach einem der vorstehenden Ansprüche, **dadurch gekennzeichnet, dass** in Schritt g) eine Testachse oder eine -symmetrieebene, welche die Randzellen in zwei Teilmengen unterteilt, willkürlich durch den Koordinatenursprung gelegt wird.

7. Verfahren nach einem der vorstehenden Ansprüche, **dadurch gekennzeichnet, dass** bei der Wiederholung von Schritt h) im Falle der in Schritt j) definierten erfüllten Bedingungen beide Teilmengen durch eine zur Testachse oder - symmetrieebene senkrechte Achse oder Ebene geteilt wird, sodass zwei Paare von Teilmengen von Randzellen erhalten werden.

8. Verfahren nach dem vorstehenden Anspruch, **dadurch gekennzeichnet, dass** die Flächenschwerpunkte für beide Paare von Teilmengen von Grenzzellen berechnet und unter den in Schritt j) definierten Bedingungen getestet werden.

9. Verfahren nach einem der vorstehenden Ansprüche, **dadurch gekennzeichnet, dass** die Teilung der Teilmengen senkrecht zur Achse oder Symmetrieebene in Schritt k) rekursiv fortgesetzt wird, bis das Teilungsintervall kleiner ist als die Größe von zwei Zellen oder ein benutzerdefinierter Parameter.

**Revendications**

1. Procédé de détection de la symétrie réflectionnelle d'objets géométriques en 2D ou en 3D stockés dans la mémoire d'un ordinateur, qui peuvent également contenir des trous, où le procédé comprend les étapes suivantes :

   a) la lecture (100) d'une bordure de l'objet géométrique,
   b) la détermination (102) d'un rectangle de délimitation aligné avec l'axe des abscisses et l'axe des ordonnées pour l'objet géométrique en 2D, ou une boîte de délimitation alignée avec l'axe des abscisses, l'axe des ordonnées et l'axe des cotes pour l'objet géométrique en 3D selon les données de délimitation de l'objet obtenues lors de l'étape a),
   c) la division (103) du rectangle de délimitation ou de la boîte de délimitation acquis lors de l'étape b) en cellules de taille égale de façon appropriée par le biais d'une fonction heuristique ou selon un nombre de cellules défini par un utilisateur,
   d) le tramage (106) de la bordure de l'objet géométrique en identifiant un ensemble de cellules de délimitation par lesquelles la bordure de l'objet géométrique passe,
   e) la détermination (107) d'un centroïde de l'ensemble des cellules de délimitation identifiées lors de l'étape d),
   f) le placement (108) d'une origine d'un système de coordonnées dans le centroïde déterminé lors de l'étape e),
   g) le placement (109) d'un axe ou plan de symétrie d'essai, de préférence parallèle à l'axe de coordonnées sélectionné, où dans le cas d'un objet en 3D, il est recommandé que le plan d'essai passe par une paire d'axes de coordonnées, c.-à-d. que les plans candidats sont XY, ou XZ, ou YZ,
   h) la division (110) de l'ensemble des cellules de délimitation en deux sous-ensembles selon l'axe/le plan de symétrie d'essai,
   i) le calcul (111) de centroïdes pour les deux sous-ensembles déterminés lors de l'étape h),
   j) le test (111) des centroïdes de la paire de sous-ensembles de cellules de délimitation et leur centroïde commun en comparant les distances perpendiculaires depuis les deux anciens centroïdes jusqu'à l'axe ou le plan de symétrie d'essai déterminé lors de l'étape g), en comparant la somme de ces deux distances et la distance mutuelle entre les deux centroïdes, et en contrôlant l'écart du centroïde commun des deux sous-ensembles par rapport à l'axe ou plan de symétrie d'essai, tout cela dans le cadre de tolérances définies par l'utilisateur ou déterminées de façon heuristique,
   k) la division (113 et 114) de façon récursive des paires de sous-ensembles de cellules de délimitation perpendiculaires à l'axe ou au plan de symétrie, le calcul (111) de centroïdes pour chaque paire de sous-ensembles obtenue avec la division, et la réalisation du test de l'étape j) jusqu'à ce que l'intervalle de division soit suffisamment petit (116) ou jusqu'à ce qu'une paire non-symétrique de sous-ensembles soit trouvée (112),

où l'objet géométrique est considéré comme symétrique si le test des centroïdes de l'étape j) est réussi pour toutes les divisions.

**2.** Le procédé selon la revendication 1, **caractérisé par le fait que** pour les objets en 2D, le procédé est répété depuis l'étape h) en faisant pivoter progressivement l'axe de symétrie d'essai autour de l'origine des coordonnées ou du centroïde jusqu'à ce que la rotation de l'axe atteigne 180 degrés en 2D.

**3.** Le procédé selon la revendication 1, **caractérisé par le fait que** pour les objets en 3D, le procédé est répété depuis l'étape h) en faisant pivoter progressivement le plan de symétrie d'essai en deux boucles imbriquées autour de deux axes de coordonnées jusqu'à ce que la somme des rotations dans chaque direction de coordonnées atteigne 180 degrés.

**4.** Le procédé selon la revendication 1, **caractérisé par le fait que** le procédé est répété depuis l'étape b) en faisant pivoter l'objet géométrique jusqu'à ce que la somme des rotations atteigne 180 degrés, en retournant à l'étape b) après chaque rotation.

**5.** Le procédé selon l'une quelconque des revendications précédentes, **caractérisé par le fait que** la bordure de l'objet lue à l'étape a) est déterminée de toute manière appropriée ou obtenue à partir des formats de fichier de systèmes de CAO, d'applications de dessin, d'images tramées, ou de formats de données d'appareils de télédétection.

**6.** Le procédé selon l'une quelconque des revendications précédentes, **caractérisé par le fait qu'**un axe ou plan de symétrie d'essai, qui divise les cellules de délimitation en deux sous-ensembles, est placé arbitrairement sur l'origine de coordonnées à l'étape g).

**7.** Le procédé selon l'une quelconque des revendications précédentes, **caractérisé par le fait que** lors de la répétition de l'étape h) dans le cas des conditions remplies définies à l'étape j), les deux sous-ensembles sont divisés par un axe ou plan perpendiculaire à l'axe ou au plan de symétrie d'essai, si bien que deux paires de sous-ensembles de cellules de délimitation sont obtenues.

**8.** Le procédé selon la revendication précédente, **caractérisé par le fait que** les centroïdes pour les deux paires de sous-ensembles de cellules de délimitation sont calculés et testés selon les conditions définies à l'étape j).

**9.** Le procédé selon l'une quelconque des revendications précédentes, **caractérisé par le fait que** la division des sous-ensembles perpendiculaires à l'axe ou au plan de symétrie est poursuivie de façon récursive à l'étape k) jusqu'à ce que l'intervalle de division soit inférieur à la taille de deux cellules ou à un paramètre défini par l'utilisateur.

100 Read geometric object boundary

101 Initialize rotation angle/angles

102 Determine bounding rectangle/box

103 Construct uniform grid

104 Determine $\delta$

105 $i = i\_min = i\_max = 1$

106 Map geometric object and set $C^{(i)}$

107 $T^{(i)} = CentreOfGravity(C^{(i)})$

108 Set origin of coordinate system in $T^{(i)}$

109 Set testing symmetry axis/plane $S$

110 Split $C^{(i)}$ into $C_1^{(i)}$ and $C_2^{(i)}$ with $S$

111 $s = SymmetryTest(C_1^{(i)}, C_2^{(i)}, S, \delta)$

118 Rotate symmetry axis/plane $S$

112 $s = symmetrical$

$i = i\_max$

116 Split interval small enough

$i = i + 1$

$i = i\_min, j = i\_max$

113 Split $C_1^{(i)}$ in $C_1^{(j+1)}$ and $C_1^{(j+2)}$

114 Split $C_2^{(i)}$ in $C_2^{(j+1)}$ and $C_2^{(j+2)}$

$i = i+1, j = j+2$

115 $i > i\_max$

$i = i\_min = i\_max + 1$

$i\_max = j$

117 Store rotation angle/angles

119 Rotation finished

120 Any angle stored

122 OBJECT IS NON-SYMMETRICAL

121 OBJECT IS SYMMETRICAL

Figure 1

$(x_b, y_b)$

**200**

$(x_a, y_a)$   **201**

**202**

**203**

**204**

$T^{(l)}$

**205**

$T^{(l)}$

$S$

Figure 2

Figure 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 8494297 B2
- US 20080021502 A1
- US 7936928 B2
- CN 103142212 B
- JP 2010014541 A
- CN 108305289

### Non-patent literature cited in the description

- Partial and Approximate Symmetry Detection for 3D Geometry. *ACM Transactions on Graphics,* 2006, vol. 25 (3), 560-668
- **CHE et al.** Dominant Symmetry Plane Detection for Point-Based 3D Models. *Advances in Multimedia,* vol. 8, 2020
- **ELAWADY et al.** Wavelet-based reflection symmetry detection via textural and colour histograms: Algorithm and results. *Proceedings of the IEEE International Conference on Computer Vision Workshops,* 2017, 1734-1738
- **SUN ; SHERRAH.** 3D symmetry detection using the extended Gaussian image. *IEEE Transactions on Pattern Analysis and Machine Intelligence,* 1997, vol. 19 (2), 164-168
- **KAKARALA et al.** Three-dimensional bilateral symmetry plane estimation in the phase domain. *Proceedings of the IEEE Conference on Computer Vision and Pattern Recognition,* 2013, 249-256
- **KORMAN et al.** in "Probably approximately symmetrical: Fast rigid symmetry detection with global guarantees. *Computer Graphics Forum,* 2015, vol. 34, 2-13
- **LI et al.** Efficient 3D reflection symmetry detection: A view-based approach. *Graphical Models,* 2016, vol. 83, 2-14
- **SCHIEBENER et al.** Heuristic 3D object shape completion based on symmetry and scene context. *2016 IEEE/RSJ International Conference on Intelligent Robots and Systems (IROS),* 2016, 74-81
- **SIMARI et al.** Folding meshes: Hierarchical mesh segmentation based on planar symmetry. *Symposium on geometry processing,* 2006, vol. 256, 111-119
- **PODOLAK et al.** A planar-reflective symmetry transform for 3D shapes. *ACM Transactions on Graphics,* 2006, vol. 25 (3), 549-559
- **CAILLIERE et al.** 3D mirror symmetry detection using Hough transform. *ICIP 2008 - 15th IEEE International Conference on Image Processing,* 2008, 1772-1775
- A symmetry prior for convex variational 3D reconstruction. **SPECIALE et al.** European Conference on Computer Vision. Springer, 2016, 313-328
- **COMBÈS et al.** Automatic symmetry plane estimation of bilateral objects in point clouds. *CVPR 2008 - IEEE Conference on Computer Vision and Pattern Recognition,* 2008, 1-8
- **ECINS et al.** Detecting reflectional symmetries in 3D data through symmetrical fitting. *Proceedings of the IEEE International Conference on Computer Vision,* 2017, 1779-1783
- **CAILLIER et al.** 3D mirror symmetry detection using Hough transform") in their paper "Approximate symmetry detection in partial 3D meshes. *Computer Graphics Forum,* 2014, vol. 33, 131-140
- **CICCONET et al.** Finding mirror symmetry via registration and optimal symmetrical pairwise assignment of curves: Algorithm and results. *Proceedings of the IEEE International Conference on Computer Vision,* 2017, 1759-1763
- **NAGAR ; RAMAN.** Detecting approximate reflection symmetry in a point set using optimization on manifold. *IEEE Transactions on Signal Processing,* 2019, vol. 67 (6), 1582-1595
- A fast and efficient 3D reflection symmetry detector based on neural networks. **JI et al.** Multimedia tools and applications. Kluwer academic publishers, 2019, vol. 78, 35471-92
- **GAO et al.** PRS-Net: Planar Reflective Symmetry Detection Net for 3D Models. *IEEE Transactions on Visualization and Computer Graphics,* 2021, vol. 27 (6
- **WU ; JIANG ; HU.** Symmetry Detection of Occluded Point Cloud Using Deep Learning. *Procedia Computer Science,* 2021, vol. 183, 32-39
- Learning-based symmetry detection in natural images. **TSOGKAS ; KOKKINOS.** European Conference on Computer Vision. Springer, 2012, 41-54
- Analysis on Image Symmetry Detection Algorithms. **XIAO ; WU.** Fourth International Conference on Fuzzy Systems and Knowledge Discovery (FSKD 2007). IEEE, 2007, vol. 4, 745-750

- **MITRA et al.** Symmetry in 3D geometry: Extraction and applications. *Computer Graphics Forum,* 2013, vol. 32 (6), 1-23

- **BARTALUCCI et al.** A survey of methods for symmetry detection on 3D high point density models in biomedicine. *Symmetry,* 2018, vol. 10 (7), 263